# EUROPÄISCHE PATENTANMELDUNG

(11) **EP 3 495 900 A1**
(43) Veröffentlichungstag der Anmeldung: **12.06.2019**
(21) Anmeldenummer: 17206448.7
(22) Anmeldetag: 11.12.2017
(51) Int. Cl.: G05B 13/02, G06Q 10/04

(54) **OPTIMIERUNG VON PROZESSEN MITHILFE VON SELBSTORGANISIERENDEN KARTEN**

(71) Anmelder: Siemens Aktiengesellschaft, 80333 München (DE)
(72) Erfinder: Bierweiler, Thomas, 76131 Karlsruhe (DE); Labisch, Daniel, 76149 Karlsruhe (DE)

(57) **Zusammenfassung**

Vorgeschlagen wird ein Optimierungsverfahren zur datenbasierten Optimierung kontinuierlicher oder diskontinuierlicher Prozesse, die auf einer industriellen Anlage, insbesondere Fertigungs- oder Produktionsanlage, ablaufen, wobei historische Daten von bereits abgelaufenen Prozessen abrufbar und auswertbar sind, umfassend: Erfassung von Messgrößen, Entscheidungsvariablen und messbaren Störgrößen, die im Rahmen der Prozesse abgreifbar sind; Einlernen der zuvor erfassten Daten in eine selbstorganisierende Karte, wobei Knoten der Karte einzelne Durchläufe der Prozesse repräsentieren; Spezifizierung eines Gütekriteriums; Berechnung des Gütekriteriums bezüglich jedes Knotens der selbstorganisierenden Karte; Durchführung eines neuen Durchlaufs des Prozesses und Erfassen der aktuellen messbaren Störgrößen und Messgrößen; Identifizierung des Knotens innerhalb der selbstorganisierenden Karte, dessen hinterlegte Störgrößen und Messgrößen einen minimalen Unterschied zu den neu erfassten Störgrößen und Messgrößen aufweisen, und dessen Gütekriterium dabei einen möglichst kleinen Wert aufweist, oder dessen Gütekriterium einen minimalen Wert aufweist, und dessen hinterlegte Störgrößen und Messgrößen dabei einen möglichst geringen Unterschied zu den neu erfassten Störgrößen und Messgrößen aufweisen.

## Beschreibung

Die Erfindung betrifft ein Optimierungsverfahren zur datenbasierten Optimierung kontinuierlicher oder diskontinuierlicher Prozesse nach Anspruch 1. Außerdem betrifft die Erfindung ein dazugehöriges Computerprogramm mit durch einen Computer ausführbaren Programmcodeanweisungen nach Anspruch 7, ein Speichermedium nach Anspruch 8 und ein Computersystem nach Anspruch 9.

Die Produktion in der Prozessindustrie kann unter verschiedenen Gesichtspunkten optimiert werden. Sowohl ökonomische als auch ökologische Aspekte können dabei eine Rolle spielen. Abhängig von der Nachfrage eines Absatzmarktes nach einem Produkt, von Einkaufskosten für die Produktion benötigter Edukte und von Energiekosten für die Produktion kann ein Betreiber einer industriellen Produktions- oder Fertigungsanlage die mit der Anlage produzierten Produkte hinsichtlich verschiedener Key Performance Indikatoren (KPI) wie Qualität, Quantität, Energiekosten, Gesamtkosten oder CO2-Ausstoß optimieren.

Speziell bei komplexeren diskontinuierlichen Prozessen (Batch-Prozessen) ist ein Zusammenhang zwischen verschiedenen Stellgrößen, die ein Prozessleitsystem oder ein Batch-System steuern kann, und deren Auswirkungen auf die KPI jedoch nicht ohne weiteres zu erkennen.

Für eine Optimierung kontinuierlicher Prozesse eignen sich sogenannte modell-prädiktive Regler (MPC). Ein MPC kann dabei zur Optimierung eines Prozesses als Gütekriterium einen KPI verwenden. Es sind weitere modellbasierte Optimierungsmethoden bekannt, die aber nur unter der Voraussetzung verwendet werden kann, dass ein geeignetes Modell des zu optimierenden Prozesses vorhanden ist, was regelmäßig nicht der Fall ist.

Modelle für diskontinuierliche Prozesse (Batch-Prozesse) stehen noch seltener zur Verfügung als bei kontinuierlichen Prozessen. Die Erstellung solcher Modelle ist jedoch sehr aufwändig und ist nur in Ausnahmefällen lohnenswert. Bei den Batch-Prozessen ist eine Optimierung hinsichtlich eines oder mehrerer KPI zudem schwierig.

Es ist bekannt, derartige Optimierungen händisch mittels einer geeigneten Visualisierung von Prozessdaten vorzunehmen, beispielsweise mittels der XHQ Operations Intelligence Plattform der Siemens AG. Die Prozessoptimierung basiert dabei häufig zu einem nicht zu vernachlässigenden Teil auf der Erfahrung des Betreibers einer Produktionsanlage. Die bisher angewandten Methoden lassen zudem keine oder kaum Rückschlüsse dahingehend zu, welches Optimierungspotential hinsichtlich bestimmter KPI bei einer industriellen Anlage besteht.

Es ist ein Optimierungsverfahren bekannt, bei dem mittels einer zur Ausführung eines Chargenprozesses bestimmten prozesstechnischen Anlage einzelne Chargen gefahren werden, von denen Chargendaten aufgenommen werden. Auf Basis einer Gütefunktion wird anschließend für jede Charge jeweils ein Wert der Gütefunktion ermittelt.

Durch Vergleich der einzelnen Chargen werden eine beste Charge und deren Rezeptparameter bestimmt. Dabei können jedoch unter anderem Rauschen oder nicht messbare Störeinflüsse unter Umständen dazu führen, dass die beste Charge mittels dieses Optimierungsverfahrens nicht ermittelt werden kann. Zudem ist ein solches Optimierungsverfahren vergleichsweise zeitaufwändig, da alle in der Vergangenheit auf der prozesstechnischen Anlage abgelaufenen Chargen bewertet werden müssen.

In der EP 3 232 282 A1 ist eine Diagnoseeinrichtung zur Überwachung einer technischen Anlage mit einem Automatisierungssystem offenbart. Die Einrichtung bedient sich dabei einer selbstorganisierenden Karte zur Ermittlung einer Zeitdauer von bestimmten Ausführungsschritten der technischen Anlage.

Die EP 2 472 440 A1 offenbart ein Verfahren zur Überwachung eines Zustands einer Prozessanlage, das sich selbstorganisierender Karten bedient.

Der Erfindung liegt die Aufgabe zugrunde, ein Optimierungsverfahren für industrielle Anlagen, insbesondere Fertigungs- oder Produktionsanlagen, anzugeben, das mit vergleichsweise geringem Material- und Kostenaufwand bei vergleichsweise geringem Zeitaufwand durchgeführt werden kann.

Diese Aufgabe wird gelöst durch ein Optimierungsverfahren zur datenbasierten Optimierung kontinuierlicher oder diskontinuierlicher Prozesse, die auf einer industriellen Anlage, insbesondere Fertigungs- oder Produktionsanlage, ablaufen, wobei historische Daten von bereits abgelaufenen Prozessen abrufbar und auswertbar sind, nach Anspruch 1. Außerdem wird diese Aufgabe gelöst durch ein Computerprogramm mit durch einen Computer ausführbaren Programmcodeanweisungen nach Anspruch 7, ein Speichermedium mit einem durch einen Computer ausführbaren Computerprogramm nach Anspruch 8 und ein Computersystem nach Anspruch 9. Vorteilhafte Weiterbildungen ergeben sich aus den abhängigen Ansprüchen.

Die Aufgabe wird bei dem Optimierungsverfahren erfindungsgemäß dadurch gelöst, dass zunächst Messgrößen, Entscheidungsvariablen und messbaren Störgrößen, die im Rahmen der Prozesse als historische Daten abgreifbar sind, erfasst werden. Eine Voraussetzung für die Anwendung des erfindungsgemäßen Verfahrens ist demnach, dass auf historische Daten des zu optimierenden Prozesses zugegriffen werden kann. Bei den Entscheidungsvariablen kann es sich beispielsweise um Parameter und Sollwerte handeln, die ein Anwender eines Prozesses veränderbar festlegen kann.

In einem nachfolgenden Schritt sieht das erfindungsgemäße Verfahren vor, die zuvor erfassten Daten in eine selbstorganisierende Karte einzulernen. Dabei repräsentieren einzelne Knoten der Karte einer Mittelung von einzelnen, bereits erfolgten Durchläufen des zu optimierenden Prozesses. Mehrere, einander ähnelnde Durchläufe werden dabei gemäß bestimmter Regeln, die zur Erzeugung der selbstorganisierenden Karte angewandt werden, zur Festlegung der Parameterkombination eines Knotens verwendet. Im Allgemeinen entspricht dabei keiner der Knoten exakt einer erfassten tatsächlichen Parameterkombination von Messgrößen, Entscheidungsvariablen und messbaren Störgrößen. Die Prinzipien, die zur Erzeugung einer selbstorganisierenden Karte angewandt werden, sind an sich bekannt und bedürfen daher an dieser Stelle keiner näheren Erläuterung.

Grundlage jeder Optimierung stellt ein Gütekriterium dar. Daher sieht das erfindungsgemäße Verfahren als nächsten Schritt vor, ein spezifisches Gütekriterium für den zu optimierenden Prozess zu definieren. Dieses Gütekriterium wird dann in der Regel zu minimieren sein und berechnet sich aus den zuvor erfassten Messgrößen, Entscheidungsvariablen und messbaren Störgrößen. Es ist selbstredend möglich, das Gütekriterium vor dem Erfassen der Daten und/oder dem Einlernen dieser Daten zu definieren.

Das Gütekriterium wird anschließend für jeden Knoten in der selbstorganisierenden Karte berechnet. Damit liegen alle Voraussetzungen für den eigentlichen Optimierungsvorgang vor.

Im Rahmen eines Durchlaufs eines Prozesses, der optimiert werden soll, werden die aktuell messbaren Störgröße und Messgrößen des Prozesses erfasst. Gemäß einer ersten Variante des erfindungsgemäßen Verfahrens wird anschließend der Knoten der selbstorganisierenden Karte identifiziert, dessen Gütekriterium einen minimalen Wert aufweist, und dessen hinterlegte Störgrößen und Messgrößen dabei einen möglichst geringen Unterschied zu den neu erfassten Störgrößen und Messgrößen aufweisen. Hierdurch wird in der Regel ein bestmögliches Optimierungsergebnis erzielt.

Alternativ kann auch ein größerer Wert auf die Minimierung eines Unterschieds der neu erfassten Stör- und Messgrößen zu den bereits in der Karte hinterlegten Größen gelegt werden, wodurch das Verfahren robuster wird, aber unter Umständen eine geringfügig schwächere Optimierungsleistung erzielt. Hierzu wird der Knoten der selbstorganisierenden Karte identifiziert, dessen Gütekriterium einen minimalen Wert aufweist, und dessen hinterlegte Störgrößen und Messgrößen dabei einen möglichst geringen Unterschied zu den neu erfassten Störgrößen und Messgrößen aufweisen.

Das Gütekriterium kann beliebig gewählt und verändert werden. So ist es beispielsweise möglich, das Gütekriterium im Rahmen eines jeden neuen Durchlaufs des Verfahrens neu zu wählen, wodurch insbesondere wechselnden Prioritäten innerhalb des Prozesses Rechnung getragen werden kann.

In einem letzten Schritt des erfindungsgemäßen Verfahrens werden eine oder mehrere optimale Entscheidungsvariablen für den neuen Durchlauf des Prozesses anhand des zuvor identifizierten Knotens der selbstorganisierenden Karte bestimmt. Unter dem zuvor identifizierten Knoten sind eine oder mehrere Entscheidungsvariablen in der selbstorganisierenden Karte hinterlegt. Diese werden ausgelesen und können bei der Durchführung eines neuen Prozessdurchlaufs zur Optimierung des Prozesses genutzt werden.

Im Gegensatz zu bislang bekannten datenbasierten Verfahren müssen bei den Optimierungsschritten des erfindungsgemäßen Verfahrens nach dem Einlernen der selbstorganisierenden Karte nur noch vergleichsweise wenige zuvor durchgeführte Durchläufe analysiert werden, wodurch die Zeitdauer für die Optimierung des Prozesses deutlich verringert werden kann. Bei den bisher bekannten Verfahren mussten hingegen in der Regel alle zuvor durchgeführten Durchläufe betrachtet werden, um Optimierungsaussagen bezüglich des Prozesses generieren zu können.

Das Verfahren kommt ohne übermäßige Hardwareanforderungen aus und kann beispielsweise direkt die Hardwareressourcen eines den Prozess regelnden Leitsystems nutzen. Zusätzliche Hardwareressourcen werden für die Anwendung des erfindungsgemäßen Verfahrens in der Regel nicht benötigt.

Durch die Anwendung des Prinzips einer selbstorganisierenden Karte werden neu durchgeführte Prozesse im Rahmen der Optimierung mit typisch ablaufenden Prozessen verglichen. Einzelne Ausreißer in den Parameterbereichen des Prozesses, die durch Rauschen oder sonstige unbekannte stochastische Störungen bedingt sein können, werden im Rahmen des Einlernens der selbstorganisierenden Karte gemittelt, wodurch eine Aussagekraft der durch die einzelnen Knoten repräsentierten typischen Durchläufe des Prozesses erhöht ist.

Das erfindungsgemäße Verfahren kann sowohl für kontinuierliche als auch für diskontinuierliche Prozesse angewandt werden. Bevorzugt wird das erfindungsgemäße Verfahren jedoch zur Optimierung eines diskontinuierlichen Prozesses, d.h. eines Batch-Prozesses, verwendet.

Vorteilhafterweise werden Key Performance Indikatoren in eine Berechnung des Gütekriteriums mit einbezogen. Dabei kann es sich um Indikatoren wie Qualität, Quantität, Energiekosten, Gesamtkosten oder CO2-Ausstoß handeln. Die Key Performance Indikatoren werden vorzugsweise direkt während oder nach Ablauf eines Prozesses messtechnisch erfasst oder werden aus den erfassten Messgrößen berechnet. Durch einen Einbezug der Key Performance Indikatoren lässt sich die Variabilität des Optimierungsverfahrens steigern.

Bei einer besonders vorteilhaften Weiterbildung des erfindungsgemäßen Verfahrens wird vor dem Einlernen der zuvor erfassten Daten in die selbstorganisierende Karte eine Vorauswahl der erfassten Daten dahingehend durchgeführt, dass von einer Störung betroffene Daten von der weiteren Auswertung ausgeschlossen werden. Dadurch lässt sich das Volumen der weiterzuverarbeitenden Daten verringern, was den Aufwand für das Optimierungsverfahren verringert. Zudem wirkt sich das Herausfiltern der unbrauchbaren Daten positiv auf eine Qualität der Optimierung aus, da keine falschen Informationen in die selbstorganisierende Karte oder die Berechnung des Gütekriteriums eingehen.

Im Falle, dass das Verfahren im Rahmen eines Batch-Prozesses durchgeführt wird, wird vorteilhafterweise für jeden einzelnen Schritt der diskontinuierlichen Prozesse jeweils eine eigene selbstorganisierende Karte eingelernt. Dadurch kann auf sich gegebenenfalls deutlich voneinander unterscheidende Teilschritte des Batch-Prozesses eingegangen werden. Vorzugsweise werden dabei zur Auswertung aller einzelnen (Teil-)Prozessschritte dieselben, zuvor ermittelten Key Performance Indikatoren verwendet.

Das beschriebene Verfahren mit seinen Ausgestaltungen ist bevorzugt in einer Software implementiert. Die zuvor ausgeführte Aufgabe wird entsprechend auch durch ein Computerprogramm mit durch einen Computer ausführbaren Programmcodeanweisungen zur Implementierung des erfindungsgemäßen Verfahrens gelöst.

Bei dem Computer kann es sich beispielsweise um ein Automatisierungsgerät mit einer Verarbeitungseinheit nach Art eines Prozessors oder dergleichen handeln. Ein Automatisierungsgerät, insbesondere ein Industrieautomatisierungsgerät, auf dem ein derartiges Computerprogramm implementiert ist, ist ein Beispiel für ein Computersystem, auf welches sich die Erfindung ebenfalls bezieht. Anstelle des Automatisierungsgerätes kommen auch Standardcomputer, wie sie bei der Büroautomatisierung üblich sind, in Betracht.

Das Computerprogramm zur Implementierung des Verfahrens wird üblicherweise auf oder in einem Speichermedium, also beispielsweise auf einem magnetischen oder optischen Datenträger oder in einem Halbleiterspeicher, vorgehalten, so dass die Erfindung auch ein Speichermedium mit einem durch einen Computer ausführbaren Computerprogramm zur Implementierung des erfindungsgemäßen Verfahrens und seiner Ausgestaltungen betrifft.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels.

Das erfindungsgemäße Verfahren wird an dem Beispiel eines Reaktors erläutert, auf dem diskontinuierliche (Batch-)Prozesse gefahren werden. Aufgabe des Reaktors ist es, eine Flüssigkeit zu erwärmen. Gleichzeitig wird ein Katalysator hinzugegeben, der eine bestimmte Reaktion auslösen soll. Dabei ist eine Menge des Katalysators eine Entscheidungsvariable, eine Menge an Flüssigkeit eine messbare Störgröße und eine Ausgangstemperatur der zu erwärmenden Flüssigkeit eine Messgröße im Sinne des erfindungsgemäßen Verfahrens. Die Menge des zuzugebenden Katalysators wird dabei zunächst auf Basis einer Erfahrung des Anwenders der Prozessanlage bestimmt. Hieraus werden Kosten für die Herstellung eines mittels der Batch-Prozesse erzeugten Endproduktes berechnet. Ebenso ergibt sich eine Qualität des Endproduktes, die nach Abschluss eines Batch-Prozesses in an sich bekannter Art und Weise ermittelt werden kann.

In der nachfolgenden Tabelle sind die den einzelnen Knoten einer selbstorganisierenden Karte zugeordneten historischen Daten verschiedener Durchläufe des Batch-Prozesses dargestellt. Dabei sind die Füllmenge an Flüssigkeit (in % eines Gesamtvolumens des Reaktors), deren Ausgangstemperatur (in Grad Celsius), die Menge des Katalysators (in Liter) und die sich daraus ergebenden Energie- und Gesamtkosten (in Euro) sowie eine Qualität der Endprodukte (in Prozent eines nicht bezeichneten Referenzwertes) für neun einzelne Knoten der selbstorganisierenden Karte dargestellt.

| Knoten | 1 | 2 | 3 | 4 | 5 |
|---|---|---|---|---|---|
| Füllmenge / % | 82 | 90 | 85 | 82 | 82 |
| Temperatur / °C | 25 | 24 | 26 | 25 | 27 |
| Katalysator / 1 | 0, 75 | 0, 92 | 0, 7 | 0, 78 | 0,8 |
| Energiekosten/ EUR | 2050 | 2340 | 2040 | 2050 | 1886 |
| Gesamtkosten / EUR | 3175 | 3720 | 3090 | 3220 | 3086 |
| Qualität / % | 80 | 85 | 90 | 83 | 90 |

| Knoten | 6 | 7 | 8 | 9 |
|---|---|---|---|---|
| Füllmenge / % | 83 | 84 | 82 | 85 |
| Temperatur / °C | 24 | 25 | 27 | 24 |
| Katalysator / 1 | 0, 82 | 0, 82 | 0, 7 | 0, 9 |
| Energiekosten/ EUR | 2100 | 2100 | 1886 | 2210 |
| Gesamtkosten / EUR | 3330 | 3330 | 2936 | 3560 |
| Qualität / % | 88 | 88 | 83 | 85 |

Nach dem Einlernen der selbstorganisierenden Karte wird ein erneuter Durchlauf des zu optimierenden Batch-Prozesses durchgeführt. Dabei sei der Reaktor zu 82% gefüllt und die Ausgangstemperatur betrage 25 Grad Celsius. Die beispielhafte Parameterkombination von Füllmenge und Ausgangstemperatur ist in der selbstorganisierenden Karte bei Knoten 1 und 4 vorhanden, was sich aus obiger Tabelle ergibt. Fraglich ist nun, welche Katalysatormenge dem Reaktor zur Erzielung eines optimalen Ergebnisses beigegeben werden muss.

Wird nun beispielsweise eine Gütefunktion zur Optimierung des Batch-Prozesses verwendet, die den Parameter "Qualität" besonders gewichtet, wird Knoten 4 die besten Ergebnisse liefern, da hier der Parameter Qualität mit 83% höher liegt als bei Knoten 1 (80%). Um einen bezüglich der Qualität der Produkte optimierten Batch-Prozess zu erhalten, sollte daher in dem beschriebenen Beispielfall eine Katalysatormenge in Höhe von 0,78 Liter verwendet werden.

Ist beispielsweise eine Qualität von mindestens 80% ausreichend und es sollen möglichst geringe Produktionskosten (Gesamtkosten) anfallen, wird Knoten 1 als optimaler Knoten identifiziert. In diesem Fall wird die optimale Katalysatormenge entsprechend dem in Knoten 1 hinterlegten Wert zu 0,75 Liter gewählt.

Im Rahmen eines weiteren Beispiels werden eine Füllmenge von 83% und eine Ausgangstemperatur von 25 Grad Celsius angenommen. Dieser Fall ist in der selbstorganisierenden Karte nicht hinterlegt, d.h. kein Knoten beinhaltet die angegebene Parameterkombination. In diesem Fall wird der oder die Knoten identifiziert, die hinsichtlich der Parameter "Füllmenge" und "Ausgangstemperatur" einen möglichst geringen euklidischen Abstand zu der Parameterkombination des erneuten Durchlaufs des Batch-Prozesses aufweisen. Im Rahmen der Berechnung des Abstands können die Parameter "Füllmenge" und "Ausgangstemperatur" mit gleichen oder unterschiedlichen Gewichtungen versehen werden.

Im Fall einer gleichen Gewichtung der beiden Parameter "Füllmenge" und "Ausgangstemperatur" ergibt sich bei den Knoten 1, 4, 6 und 7 jeweils ein euklidischer Abstand von 1 in Bezug auf die Vergleichsparameter (Füllmenge = 83%, Ausgangstemperatur = 25 Grad Celsius) des erneuten Durchlaufs des Batch-Prozesses. Alle anderen Knoten weisen einen höheren euklidischen Abstand zu den Vergleichsparametern auf.

Für jeden der zuvor ermittelten Knoten 1, 4, 6 und 7 wird anschließend ein beliebiges Gütekriterium ermittelt, beispielsweise mittels Einbezug der Qualität der Endprodukte des Batch-Prozesses oder der mit dem Prozess verbundenen Energiekosten. Zuletzt wird der Knoten identifiziert, der ein minimales Gütekriterium aufweist und die Katalysatormenge entsprechend gewählt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Optimierungsverfahren zur datenbasierten Optimierung kontinuierlicher oder diskontinuierlicher Prozesse, die auf einer industriellen Anlage, insbesondere Fertigungs- oder Produktionsanlage, ablaufen, wobei historische Daten von bereits abgelaufenen Prozessen abrufbar und auswertbar sind, umfassend:
a) Erfassen von Messgrößen, Entscheidungsvariablen und messbaren Störgrößen, die im Rahmen bereits erfolgter Durchläufe der Prozesse als historische Daten abgreifbar sind;
b) Einlernen der zuvor erfassten Daten in eine selbstorganisierende Karte, wobei Knoten der Karte einzelne Durchläufe der Prozesse repräsentieren;
c) Spezifizierung eines Gütekriteriums;
d) Berechnung des Gütekriteriums bezüglich jedes Knotens der selbstorganisierenden Karte;
e) Durchführung eines neuen Durchlaufs des Prozesses und Erfassen der aktuellen messbaren Störgrößen und Messgrößen;
f) Identifizierung des Knotens innerhalb der selbstorganisierenden Karte, dessen Gütekriterium einen minimalen Wert aufweist, und dessen hinterlegte Störgrößen und Messgrößen dabei einen möglichst geringen Unterschied zu den neu erfassten Störgrößen und Messgrößen aufweisen, oder dessen hinterlegte Störgrößen und Messgrößen einen minimalen Unterschied zu den neu erfassten Störgrößen und Messgrößen aufweisen, und dessen Gütekriterium dabei einen möglichst kleinen Wert aufweist;
g) Bestimmung optimaler Entscheidungsvariablen für den neuen Durchlauf des Prozesses anhand des zuvor identifizierten Knotens der selbstorganisierenden Karte.

2. Optimierungsverfahren nach Anspruch 1, bei dem Key Performance Indikatoren in eine Berechnung des Gütekriteriums miteinbezogen werden, wobei die Key Performance Indikatoren vorzugsweise direkt während oder nach Ablauf eines Prozesses messtechnisch erfasst werden oder aus den erfassten Messgrößen berechnet werden.

3. Optimierungsverfahren nach Anspruch 1 oder 2, bei dem vor dem Einlernen der zuvor erfassten Daten in die selbstorganisierende Karte gemäß Verfahrensschritt b des Anspruchs 1 eine Vorauswahl der erfassten Daten durchgeführt wird, dahingehend, dass von einer Störung betroffene Daten von der weiteren Auswertung ausgeschlossen werden.

4. Optimierungsverfahren nach einem der vorangegangenen Ansprüche, das zur Optimierung eines kontinuierlichen Prozesses verwendet wird.

5. Optimierungsverfahren nach einem der Ansprüche 1 bis 3, das zur Optimierung eines diskontinuierlichen Prozesses verwendet wird.

6. Optimierungsverfahren nach Anspruch 5, bei dem für jeden einzelnen Schritt der diskontinuierlichen Prozesse jeweils eine eigene selbstorganisierende Karte eingelernt wird, wobei vorzugsweise zur Auswertung aller einzelnen Prozessschritte dieselben Key Performance Indikatoren gemäß Anspruch 2 verwendet werden.

7. Computerprogramm mit durch einen Computer ausführbaren Programmcodeanweisungen zur Implementierung des Verfahrens nach einem der Ansprüche 1 bis 6.

8. Speichermedium mit einem durch einen Computer ausführbaren Computerprogramm gemäß Anspruch 7.

9. Computersystem, auf dem ein Computerprogramm nach Anspruch 7 implementiert ist.
